# EUROPEAN PATENT APPLICATION

(11) **EP 3 021 184 A1**
(43) Date of publication of application: **18.05.2016**
(21) Application number: 13889237.7
(22) Date of filing: 12.07.2013
(51) Int. Cl.: G05B 19/418

(54) **SMART HOUSE SYSTEM AND OPERATION METHOD THEREFOR**

(71) Applicant: Lee, Wen-Sung, Taichung City 40861, Taiwan (TW)
(72) Inventor: Lee, Wen-Sung, Taichung City 40861, Taiwan (TW)
(74) Representative: Cabinet Chaillot
(86) International application number: PCT/CN2013/079262
(87) International publication number: WO 2015/003377

(57) **Abstract**

An intelligent system for residence is communicated with various electrical devices in the residence. The intelligent system comprises an identification device, a positioning device, an artificial neutral device. The artificial neutral device includes a memory unit, a learning unit, and a decision unit. The memory unit is stored the identity information, the coordinate information, and a control information modulated the electrical devices by the user, the learning unit is read the whole information stored in the memory unit so as to learnautomatically and integrate the whole information, and the decision unit is read the whole information to modulate the electrical devices to an operation status which is usual for the user. Therefore, the user may be in a specific coordinate to modulate the electrical devices to the operation status which is usual for the user by the artificial neutral device to achieve the effects of intelligent detection and modulation.

## Description

### BACKGROUND OF THE INVENTION

### 1. Field of the Invention

The present invention relates to an intelligent system for residence and an operation method thereof, and especially relates to the intelligent system with the functions of judging, learning, recording, and predicting and capable for automatically modulate the operation status of each electrical device in the residence to a status adaptable to the user.

### 2. Description of Related Art

There are many areas in general residence environment, such as living room, study, bedroom, rest room, and so on. Each area has arranged many electrical devices, such as air conditioner, lamp, speaker, fan, and so on. Everyone has his own request for the environment status in different areas. In order to stay in a comfortable environment, the temperature of the air condition, the brightness of the lamp, magnitudes of the speaker or the fan may be activated by a remote control when the user enters an area and the status of each electrical device may be modulated individually after being activated to make the environment status meet his own request.

Because the user must operate the control by hand to activate or shut down each electrical device, the user may forget to shut down the electrical devices or waste more electric energies while leaving. Therefore, an automatic turning ON/OFF device is developed to detect the entrance of the user, such as the Taiwanese patent no. M413889, M270788, M441805, and U.S. patent no. 7142652, and U.S. publication no. 20120306661. Please reference to the Taiwanese patent no. M441805, it disclosed an electrical power saving control device which is connected to a target device. The electrical power saving control device comprises a control module, a detecting module, a communication module, and a processing unit. The control module is controlled the target device to operate in at least one operation mode. The detecting module is detected an environment condition of an environment to generate a detecting information. The electrical power saving control device communicates with a far-end electrical device through the communication module. The processing unit is electrically connected with the control module, the detecting module, and the communication module. A preset value is inputted by the far-end electrical device and transmitted to the processing unit through the communication module to store. The processing unit may also receive the detecting information. When the processing unit judges that the detecting information meets the preset value, the target device is controlled by the control module to operate the operation mode corresponding preset value.

The prior art shows that the preset value is inputted by the far-end electrical device and transmitted to the processing unit to store with the communication module, and the processing unit may also receive the detecting information. When the processing module judges that the detecting information meets the preset value, the target device may be controlled by the control module to process the operation mode corresponding to the preset value and further achieve the effect of power saving. It is mainly applied to the specific computer programs to automatically activate the operation of the target device. However, in order to provide more intelligent device than the prior art, it may automatically modulate each electrical device to the request environment conditions based on various users.

In view of the foregoing circumstances, the inventor has invested a lot of time to study the relevant knowledge, compare the pros and cons, research and develop related products. After quite many experiments and tests, the "intelligent system for residence and operation method thereof' of this invention is eventually launched to improve the foregoing shortcomings, to meet the public use.

### SUMMARY OF THE INVENTION

An object of this invention is providing an intelligent system for residence. The system is capable for recording(memorizing), learning, and predicting information, and further identifying the identity of the user(s) stayed in each area of the residence to modulate the electrical devices based on the requests of various users to achieve the effects of intelligent modulation and the environment status control.

In order to achieve above mentioned effects, an intelligent system for residence is provided. The intelligent system for residence, arranged in a residence and communicated with various electrical devices arranged in the residence, the intelligent system comprising: an identification device, identified an identity of a user stayed in the residence and outputted an identity information; a positioning device, located a coordinate of the user and outputted a coordinate information; and an artificial neutral device, electrically connected with the identification device and the positioning device, the artificial neutral device includes a memory unit, a learning unit, and a decision unit, the memory unit, the learning unit, and the decision unit are transmitted signals to one another, the memory unit is stored the identity information, the coordinate information, and a control information modulated the electrical devices by the user, the learning unit is read the whole information stored in the memory unit so as to learn automatically and integrate the whole information, and the decision unit is read the whole information to modulate the electrical devices to an operation status which is usual for the user; wherein the user may be in a specific coordinate to modulate the electrical devices arranged in the residence to the operation status which is usual for the user by the memory unit, the learning unit, and the decision unit of the artificial neutral device to achieve the effects of intelligent detection and modulation.

The intelligent system may further comprise a time recorder electrically connected with the memory unit, the time recorder is continuously transmitted a time information to the memory unit to store.

In some embodiments, the artificial neutral device further includes a sorting unit electrically connected with the memory unit and the learning unit, and the sorting unit is stored an order information.

In some embodiments, the artificial neutral device further includes a judging unit electrically connected with the memory unit and the learning unit, a newest control information is read when a single identity information and a single coordinate information stored in the memory unit is corresponding to a plurality of the control information judged by the judging unit.

The intelligent system may further comprise a controller electrically connected with the memory unit to transmit the control information to the memory unit, and the controller includes an individual operating interface or transferring and corresponding type communication equipment.

An operation method of an intelligent system for residence is further disclosed. the steps of the method may comprise:
an identification step: identifying an identity of a user with an artificial neutral device while the user is entered a residence;
a positioning step: locating a coordinate of the user with the artificial neutral device while the user is entered the residence;
a recording step: recording the identity of the user, the coordinate of the user, and a control information of electrical devices arranged in the residence at any time which is operated by the user with the artificial neutral device to form a user behavioral model;
a learning step: automatically learning and integrating general settings of the electrical devices modulated by the user with the artificial neutral device based on the user behavioral model; and
a predicting step: cooperating with the identity and the judgment of the coordinate of the user after identifying the identity and the coordinate of the user to predict which electrical devices the user wants to operate, an operation status of the electrical devices, and the user behavioral model to operate the electrical devices;
wherein the user may be in a specific coordinate to modulate the electrical devices arranged in the residence to the operation status which is usual for the user by the artificial neutral device with functions of recording, learning, and decision to achieve the effects of intelligent detection and modulation.

In some embodiments, the recording step further includes recording a time information and recording the time information, the coordinate, and the operation status of the electrical devices in a time interval; the artificial neutral device is automatically learning and integrated usual settings of the electrical devices in a specific time interval and a specific coordinate based on the recording step in the learning step; and the artificial neutral device is judged and predicted which electrical devices which the user want to operate and the operation status to operate the electrical devices in the usual operation status through the learning step in the predict step after identifying the identity and the coordinate of the user.

The method may further comprise a multiuser mode step which is stepped in between the recording step and the learning step, the artificial neutral device is judged a priority of the users in the learning step and the artificial neutral device is used the identity and the coordinate of a first priority of the user to judge and predict which electrical devices the user wants to operate, the operation status of the electrical devices to operate the electrical devices with the operation status of the first priority of the user while the artificial neutral device is identified a plurality of identities of users in the identification step and the positioning step.

The method may further comprise a monitoring environment step, the artificial neutral device is recorded the environmental temperatures and humidity inside and outside the residence and monitored the identity, the number of the users, and the operation status of the electrical devices in the residence and then transmitted to a display device to be read by the users.

In some embodiments, the artificial neutral device is judged whether there is a new control information or not to modulate the operated electrical devices to the usual operation status of the user by cooperating with the identity of the user, the coordinate, and the time information based on the recording step in the learning step.

The various objectives and advantages of the present invention will be more readily understood from the following detailed description when read in conjunction with the appended drawing.

### BRIEF DESCRIPTION OF THE DRAWINGS

FIG. 1 is a block diagram of an intelligent system for residence of the present invention;
FIG. 2 is a block diagram of the intelligent system for residence of the present invention while being applied;
FIG. 3 is an exploded view of the intelligent system for residence of the present invention while a single person is stayed indoors;
FIG. 4 is an exploded view of the intelligent system for residence of the present invention while multiple users are stayed indoors;
FIG. 5 is a view of a controller of the intelligent system for residence of the present invention while being in an operation status; and
FIG. 6 is a flow chart of an operation method of the intelligent system for residence of the present invention.

### DETAILED DESCRIPTION OF THE INVENTION

To describe clearly that the present invention achieves the foregoing objective and function, the technical features and desired function are described with reference to a preferred embodiment and accompanying drawings.

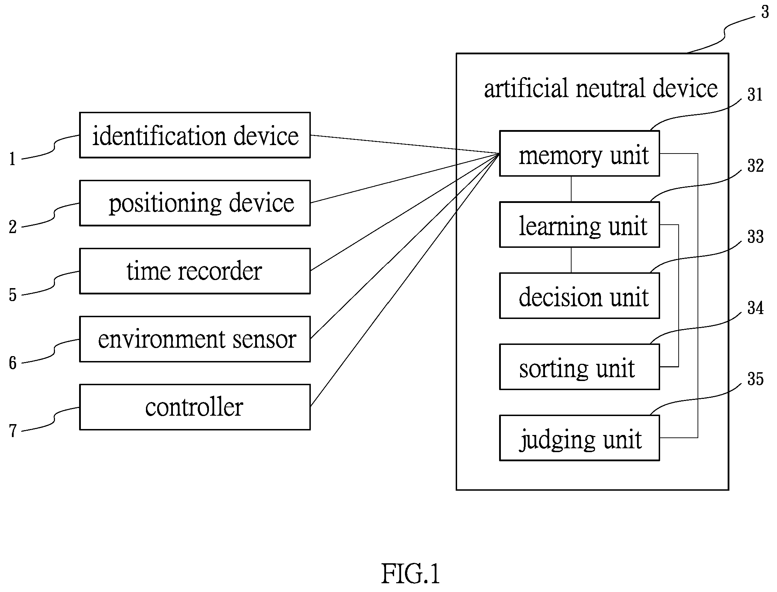

Please reference to FIGs. 1 to 2, an intelligent system for residence may be arranged in a residence and communicated with various electrical devices which are arranged in the residence. The intelligent system may comprise an identification device 1, a positioning device 2, and an artificial neutral device 3. The identification device 1 may be identified an identity of a user who is stayed in the residence and outputted an identity information. The positioning device 2 may be located a coordinate of the user and outputted a coordinate information. The artificial neutral device 3 may be electrically connected with the identification device and the positioning device. The artificial neutral device 3 may include a memory unit 31, a learning unit 32, and a decision unit 33. The memory unit 31, the learning unit 32, and the decision unit 33 are transmitted signals to one another. The memory unit 31 is stored the identity information, the coordinate information, and a control information which is modulated the electrical devices by the user. The learning unit 32 is read the whole information which is stored in the memory unit 31 so as to learn automatically and integrate the whole information. And the decision unit 33 is read the whole information to modulate the electrical devices 4 to an operation status which is usual for the user.

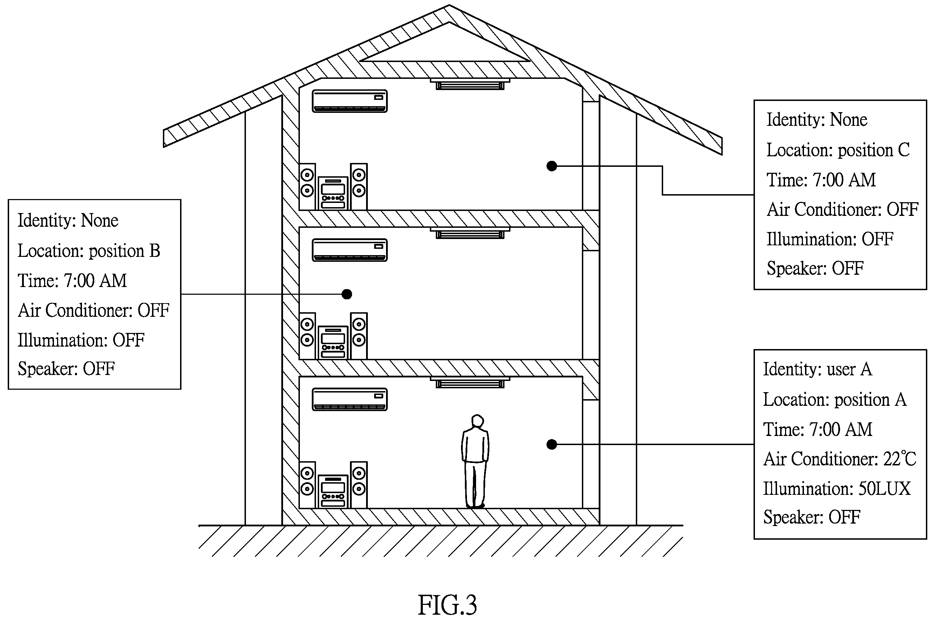

Please refer to FIG. 3. When a user A (Father) is entering the residence in a position A (coordinate (1,15)), the identification device 1 may identify the identity of the user first and then transmit the identity information to the artificial neutral device 3 and the positioning device 2 monitors the precise position of the user at any time so as to transmit the coordinate information to the memory unit 31 of the artificial neutral device 3 for being stored. Therefore, the learning unit 32 may learn the usual status model of the user from the memory unit 31. For example, the identity information is the user A(Father), the coordinate information is the position A (coordinate (1,15)), the temperature of an air conditioner is 22°C and the illuminance is 50LUX while the user A(Father) is stayed in the position A(coordinate (1,15)), and the speaker is turned off. The decision unit 33 may learn the user's behavioral model from the learning unit 32 and predict to automatically modulate the temperature of the air condition to 22°C and the illuminance to 50LUX, and to turn off the speaker when the identity information is the user A(Father) and the coordinate information is the coordinate (1,15).

Accordingly, the electrical devices 4 may be controlled in the user's usual operation status which corresponds to the specific coordinates (positions) of different users through the memory unit 32, the learning unit 32, and the decision unit 33 of the artificial neutral device 3 to achieve the effects of intelligent detection and modulation.

The advantage is that the users or the uses of the users may be precisely identified and positioned, the possibly actions of the users may be memorized and predicted to precisely and automatically modulate each electrical device 4 in the residence to the users' usual operation mode.

In addition, in order to provide to record the time information, the intelligent system of the present invention further comprises a time recorder 5 which is electrically connected with the memory unit 31. The time recorder 5 is continuously transmitted the time information to the memory unit to store. Accordingly, the learning unit 32 may be learned the regular coordinate position and the regular time of the user so as to modulate the electrical devices 4 to the operation mode, such that Father is stayed at coordinate (1,0) and pm18:00 and the air conditioner is modulated to 20°C.

Furthermore, the intelligent system of the present invention further comprises a plurality of environment sensors 6 which each is electrically connected with the memory unit 31. Each environment sensor 6 may detect the temperatures and humidity inside and outside of the environment. Therefore, the environment sensor 6 may be a temperature sensor, a humidity sensor, and so on to monitor the environment status inside the residence at any time.

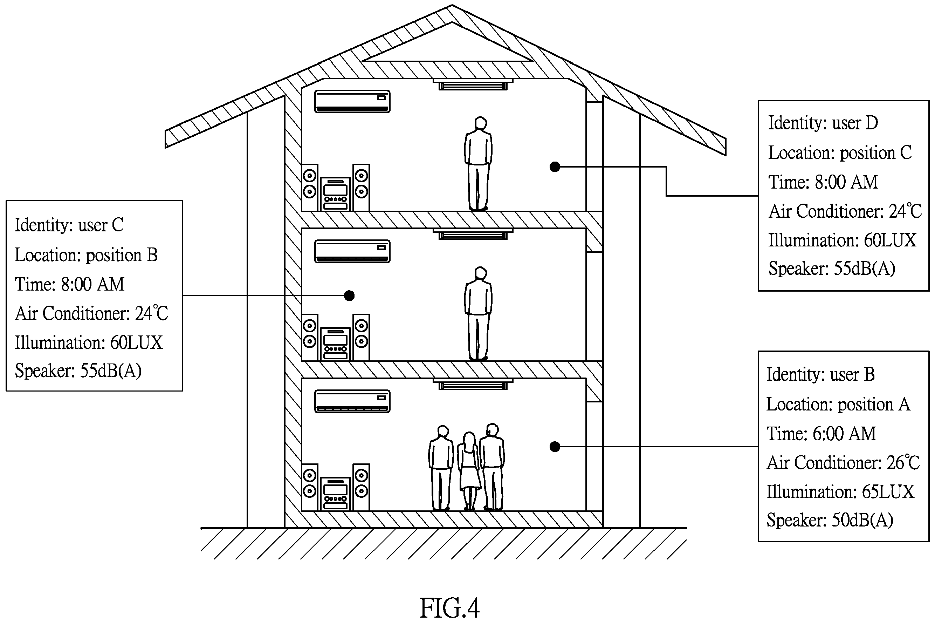

In order to cooperate with multiple users who are stayed at the same coordinate, the artificial neutral device 3 may further include a sorting unit 34 which is electrically connected with the memory unit 31 and the learning unit 32. The sorting unit 34 may be stored an order information. The sorting unit 34 may sort the priority of the modulation based on the user. In FIG. 4, there are three users in the position A. However, the priority is the user 2, the user A, and the user 3 in series. When the three users are stayed at the position A at the same time, the artificial neutral device 3 is automatically modulating the temperature of the air conditioner to 26°C, the illuminance to 65LUX and the speaker to 50dB(A) based on the usual mode of the user 2.

What is worth mentioning is that the artificial neutral device 3 further includes a judging unit 35 which is electrically connected with the memory unit 31 and the learning unit 32. A newest control information is read when a single identity information and a single coordinate information stored in the memory unit is corresponding to a plurality of the control information judged by the judging unit 35. For example, the temperature of the air conditioner is modulated to 15°C while Father is stayed in the coordinate (25,40). But the temperature of the air conditioner is modulated to 20°C because Father feels too cold in temperature 15°C who is stayed in the coordinate (25,40). Therefore, the judging unit 35 may automatically judge the control information to change the advanced learning behavioral model of Father.

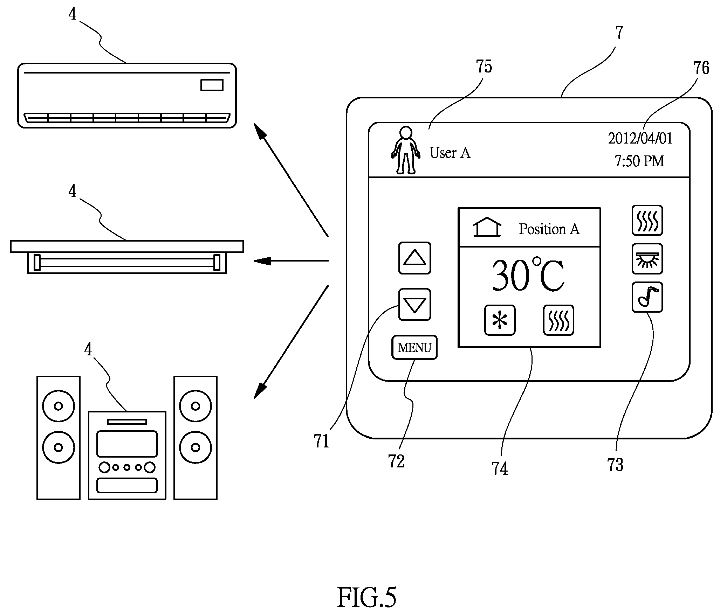

The intelligent system of the present invention may further comprise a controller 7 which is electrically connected with the memory unit 31 to transmit the control information to the memory unit 31. The controller 7 may include an individual operating interface or transferring and corresponding type communication equipment. In FIG. 5, the controller 7 has an operating interface and the operating interface is a touch panel which has the functions of input and display. In this embodiment, the left side of the operating interface is a fine-tune block 71 which may fine tune the temperature of the air conditioner by touching and pressing the "UP" key and the "DOWM" key. A main menu key 72 is located below the fine-tune block 71. The right side of the operating interface is an indicating electrical device block 73 which may be pressed to modulate the corresponding electrical device 4. Furthermore, a display environment status block 74 is located between the fine-tune block 71 and the indicating electrical device block 73. The FIG. 5 shows that the current environment temperature in the position A where the user is stayed is " 30°C". The upper left side of the operating interface is an identification block 75. The FIG. 5 shows " user A". The upper right side of the operating interface is a time and date block 76. In FIG. 5 shows "2012/04/01 7:50PM". Therefore, the user may control the electrical devices 4 through the controller 7 and simultaneously know information of the environment status. The controller 7 may be an electrical device, a tablet PC, and so on. The controller 7 may remotely control the artificial neutral device 3.

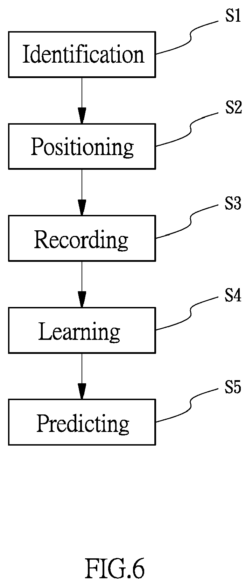

Please refer to FIGs. 1, 5, and 6, an operation method of the intelligent system for residence is disclosed. The steps of the operation method comprise:
an identification step S1: identifying the identity of the user with the artificial neutral device 3 while the user is entered the residence;
a positioning step S2: locating the coordinate of the user with the artificial neutral device 3 while the user is entered the residence;
a recording step S3: recording the identity of the user, the coordinate of the user, and the control information of electrical devices 4 arranged in the residence at any time which is operated by the user with the artificial neutral device 3 to form the user behavioral model;
a learning step S4: automatically learning and integrating general settings of the electrical devices 4 modulated by the user with the artificial neutral device 3 based on the user behavioral model; and
a predicting step S5: cooperating with the identity and the judgment of the coordinate of the user after identifying the identity and the coordinate of the user to predict which electrical devices 4 the user wants to operate, an operation status of the electrical devices 4, and the user behavioral model to operate the electrical devices 4.

Accordingly, the user may be in a specific coordinate to modulate the electrical devices 4 arranged in the residence to the operation status which is usual for the user by the artificial neutral device 3 with functions of recording, learning, and decision to achieve the effects of intelligent detection and modulation.

When the user enters the residence, the intelligent system may automatically modulate the electrical devices 4 to the usual behavioral model of the user through the identification step S1, the positioning step S2, the recording step S3, the learning step S4, and the predicting step S5.

The recording step S3 further includes recording a time information and recording the time information, the coordinate, and the operation status of the electrical devices 4 in a time interval. The artificial neutral device 3 is automatically learning and integrated usual settings of the electrical devices 4 in a specific time interval and a specific coordinate based on the recording step S3 in the learning step S4. The artificial neutral device 3 is judged and predicted which electrical devices 4 which the user want to operate and the operation status to operate the electrical devices in the usual operation status through the learning step S4 in the predict step S5 after identifying the identity and the coordinate of the user.

The operation method may further comprise a multiuser mode step which is stepped in between the recording step S3 and the learning step S4. The artificial neutral device 3 is judged a priority of the users in the learning step S4 and the artificial neutral device 3 is used the identity and the coordinate of a first priority of the user to judge and predict which electrical devices 4 the user wants to operate, the operation status of the electrical devices 4 to operate the electrical devices 4 with the operation status of the first priority of the user while the artificial neutral device 3 is identified a plurality of identities of users in the identification step S1 and the positioning step S2.

The operation method may further comprise a monitoring environment step. The artificial neutral device 3 is recorded the environmental temperatures and humidity inside and outside the residence and monitored the identity, the number of the users, and the operation status of the electrical devices 4 in the residence and then transmitted to a display device to be read by the users.

The artificial neutral device 3 is judged whether there is a new control information or not to modulate the operated electrical devices 4 to the usual operation status of the user by cooperating with the identity of the user, the coordinate, and the time information based on the recording step S3 in the learning step S4.

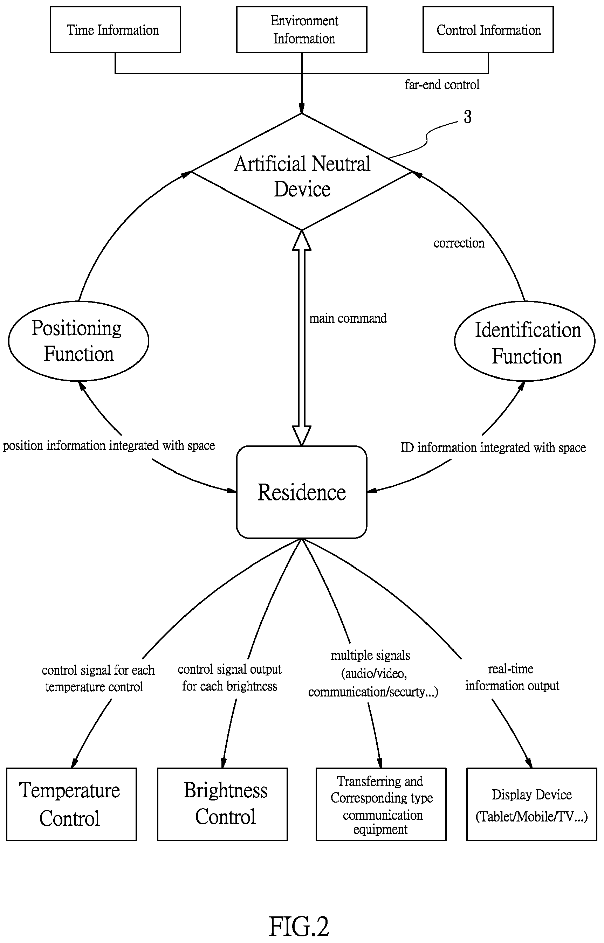

In conclusion, please refer to FIG. 2, the artificial neutral device 3 receives the time information, the environment information, and the control information and then monitors and communicates with the residence through the above mentioned information, shown as the white arrow in the figure. The identity information of the space is integrated therewith to achieve the effect of identification and the position information of the space is integrated therewith to achieve the effect of positioning. The control information is outputted to meet the request of the environment, such as temperature control, brightness control, and so on. The real-time information is outputted to the display device, such as tablet PC, mobile phone, or TV, for providing to the users to see and know, and the multiple signals(such as audio/video, communication, and security) is outputted to an adaptable device control interface.

The foregoing descriptions are merely the exemplified embodiments of the present invention, where the scope of the claim of the present invention is not intended to be limited by the embodiments. Any equivalent embodiments or modifications without departing from the spirit and scope of the present invention are therefore intended to be embraced.

The disclosed structure of the invention has not appeared in the prior art and features efficacy better than the prior structure which is construed to be a novel and creative invention, thereby filing the present application herein subject to the patent law.

## Claims

1. An intelligent system for residence, arranged in a residence and communicated with various electrical devices arranged in the residence, the intelligent system comprising:
an identification device, identified an identity of a user stayed in the residence and outputted an identity information;
a positioning device, located a coordinate of the user and outputted a coordinate information; and
an artificial neutral device, electrically connected with the identification device and the positioning device, the artificial neutral device includes a memory unit, a learning unit, and a decision unit, the memory unit, the learning unit, and the decision unit are transmitted signals to one another, the memory unit is stored the identity information, the coordinate information, and a control information modulated the electrical devices by the user, the learning unit is read the whole information stored in the memory unit so as to learn automatically and integrate the whole information, and the decision unit is read the whole information to modulate the electrical devices to an operation status which is usual for the user;
wherein the user may be in a specific coordinate to modulate the electrical devices arranged in the residence to the operation status which is usual for the user by the memory unit, the learning unit, and the decision unit of the artificial neutral device to achieve the effects of intelligent detection and modulation.

2. The intelligent system as claimed in claim 1, further comprises a time recorder electrically connected with the memory unit, the time recorder is continuously transmitted a time information to the memory unit to store.

3. The intelligent system as claimed in claim 2, wherein the artificial neutral device further includes a sorting unit electrically connected with the memory unit and the learning unit, and the sorting unit is stored an order information.

4. The intelligent system as claimed in claim 3, wherein the artificial neutral device further includes a judging unit electrically connected with the memory unit and the learning unit, a newest control information is read when a single identity information and a single coordinate information stored in the memory unit is corresponding to a plurality of the control information judged by the judging unit.

5. The intelligent system as claimed in claim 1, further comprises a controller electrically connected with the memory unit to transmit the control information to the memory unit, and the controller includes an individual operating interface or transferring and corresponding type communication equipment.

6. An operation method of an intelligent system for residence, the steps comprising:
an identification step: identifying an identity of a user with an artificial neutral device while the user is entered a residence;
a positioning step: locating a coordinate of the user with the artificial neutral device while the user is entered the residence;
a recording step: recording the identity of the user, the coordinate of the user, and a control information of electrical devices arranged in the residence at any time which is operated by the user with the artificial neutral device to form a user behavioral model;
a learning step: automatically learning and integrating general settings of the electrical devices modulated by the user with the artificial neutral device based on the user behavioral model; and
a predicting step: cooperating with the identity and the judgment of the coordinate of the user after identifying the identity and the coordinate of the user to predict which electrical devices the user wants to operate, an operation status of the electrical devices, and the user behavioral model to operate the electrical devices;
wherein the user may be in a specific coordinate to modulate the electrical devices arranged in the residence to the operation status which is usual for the user by the artificial neutral device with functions of recording, learning, and decision to achieve the effects of intelligent detection and modulation.

7. The method as claimed in claim 6, wherein the recording step further includes recording a time information and recording the time information, the coordinate, and the operation status of the electrical devices in a time interval;
the artificial neutral device is automatically learning and integrated usual settings of the electrical devices in a specific time interval and a specific coordinate based on the recording step in the learning step; and
the artificial neutral device is judged and predicted which electrical devices which the user want to operate and the operation status to operate the electrical devices in the usual operation status through the learning step in the predict step after identifying the identity and the coordinate of the user.

8. The method as claimed in claim 6, further comprises a multiuser mode step which is stepped in between the recording step and the learning step, the artificial neutral device is judged a priority of the users in the learning step and the artificial neutral device is used the identity and the coordinate of a first priority of the user to judge and predict which electrical devices the user wants to operate, the operation status of the electrical devices to operate the electrical devices with the operation status of the first priority of the user while the artificial neutral device is identified a plurality of identities of users in the identification step and the positioning step.

9. The method as claimed in claim 6, further comprises a monitoring environment step, the artificial neutral device is recorded the environmental temperatures and humidity inside and outside the residence and monitored the identity, the number of the users, and the operation status of the electrical devices in the residence and then transmitted to a display device to be read by the users.

10. The method as claimed in claim 6, wherein the artificial neutral device is judged whether there is a new control information or not to modulate the operated electrical devices to the usual operation status of the user by cooperating with the identity of the user, the coordinate, and the time information based on the recording step in the learning step.
